# EUROPEAN PATENT APPLICATION

(11) **EP 4 723 140 A1**
(43) Date of publication of application: **08.04.2026**
(21) Application number: 24813623.6
(22) Date of filing: 14.05.2024
(51) Int. Cl.: H01B 5/00, H01B 5/02, H02B 1/20, H02G 5/00, H02G 5/10

(54) **RECTANGULAR TUBULAR CONDUCTOR BUSBAR WITH SOLID CORE AND INTERNAL HEAT DISSIPATION**

(30) Priority: 02.06.2023 BR 102023010950
(71) Applicant: Francisquini, Melquisedec, 06706-060 Cotia (BR)
(72) Inventor: Francisquini, Melquisedec, 06706-060 Cotia (BR)
(74) Representative: Pons IP
(86) International application number: PCT/BR2024/050195
(87) International publication number: WO 2024/243661

(57) **Abstract**

"RECTANGULAR TUBULAR CONDUCTOR BUSBAR WITH SOLID CORE AND INTERNAL HEAT DISSIPATION" presenting a rectangular tubular shape, applied in electrical cabinets for low and high voltage power switchgears and prefabricated electrical lines, in its main construction, comprises a rectangular tubular busbar (P), in a substantially parallelepipedal shape. It has a body (1) delimited by external walls and a solid core (2) formed by overlapping elements, said core having thickness approximately triple that of the walls forming the body (1) and being located between the upper and lower walls of the body (1). The rectangular tubular busbar (P) comprises two distinct regions: a hollow area (A1), delimited between the rear face of the busbar (P) and its upper and lower faces; and the solid core (2), located in the region delimited by the front face of the busbar (P) and the same upper and lower walls, together with the hollow area (A1).

## Description

### Application Field

The present invention relates to an electrical conductor busbar, more specifically to a rectangular tubular-shaped conductor busbar, also known as flat busbar, with a solid core and internal heat dissipation, applied in electrical cabinets for low, medium, and high voltage power switchgears and prefabricated electrical lines (busway/armored busbars).

### Description of the Prior Art

Low, medium, and high voltage power switchgears are essential for any electrical installation in all sectors of economic activity. Such assemblies are intended for use together with equipment designed for the generation, transmission, distribution, and conversion of electrical energy and for the control of equipment that consumes electrical energy. These assemblies consist of an electrical cabinet, functional units where individual devices are installed, and the busbar system.

The busbar system is a low-impedance conductor to which several electrical circuits can be separately connected. Its function is to conduct electrical energy between various points in an assembly, and its sizing should consider the following factors:
a) The temperature rise caused by the flow of electrons under normal operating conditions, said temperature rise being related to the choice of material used;
b) Thermal and dynamic stresses caused by unusual situations such as voltage and current peaks, short circuits, and accidental electric arcs;
c) Leakage currents caused by the proximity between conductors and between conductors and metallic parts of the electrical cabinet; and
d) The quantity and manner in which connections and branches are made.

Given these intrinsic characteristics of electrical busbars, they are almost entirely manufactured from copper bars with a rectangular cross-section, as copper has good electrical conductivity, relatively low manufacturing costs compared to other conductor materials such as silver and gold, and higher mechanical strength than aluminum, another commonly used conductor for industrial purposes.

Conductor busbars, when subjected to high values of alternating current, are greatly affected by the skin effect, wherein the useful area for electricity conduction is reduced because alternating current tends to concentrate on the conductor's periphery, decreasing the current density inside.

As a consequence of the skin effect, more material is used in the production of solid busbars, increasing their cross-sectional area to ensure a low apparent electrical resistance conductor, which reduces the negative effects of the skin effect, resulting in a more effective busbar.

Solid bars with a low current density per mm² rectangular profile are used almost entirely in copper busbar applications of electrical cabinets. This configuration is typically found in various dimensions, such as 100x10 mm, 80x10 mm, 50x10 mm, among others.

Busbars in other shapes are also used, an example being that presented in document BR 10 2018 068113-3 filed on 09/06/2018, with the aim of increasing the perimeter, improving thermal dissipation, and reducing losses caused by the skin effect, optimizing the current density in the material for high currents, thereby enabling the use of less material for its construction.

Another example of a tubular busbar known in the prior art is the subject matter of patent document BR 10 2017 019384-5, which presents an electrical cabinet assembly containing main conductor busbars and secondary conductor busbars constructed in a closed tubular shape, mounted in said electrical cabinet assembly, which also includes insulators and secondary insulators, protection system on the main conductor busbars, extender assembly, and finally, branch connectors.

Additionally, another patent document concerning tubular busbars applied in electrical cabinets is the subject matter of patent document BR 10 2020 003216-0, which deals with an electrical conductor busbar, more specifically a conductor busbar, with a sinusoidal tubular shape, applied in electrical cabinets for low and high voltage power switchgears and prefabricated electrical lines. The busbar has an initial crimping tab, which connects to a first sinusoid, which in turn connects to a junction tab, which in turn connects to a second sinusoid, so that said first sinusoid and second sinusoid form a tubular region between them, where there is no contact between said first sinusoid and second sinusoid. Said second sinusoid is connected to a final crimping tab, or alternatively, a second junction tab, which connects to a third sinusoid, with said third sinusoid connecting to a final crimping tab.

Another technical issue present in the documents mentioned as examples of the prior art relates to heat dissipation of the busbars, since electrical conductivity varies with temperature, and in some cases, due to the skin effect, the contact area between the walls of a tubular electrical busbar tends to experience a substantial increase in temperature, which can affect its performance in certain applications.

Furthermore, another technical issue present in the documents mentioned as examples of the prior art is that said tubular busbars have configurations in different shapes from conventional busbars, making it difficult to simply replace a conventional busbar with a tubular busbar in an electrical cabinet.

Therefore, the prior art would benefit from a rectangular tubular busbar with dimensions similar to conventional solid busbars, facilitating the replacement of one with the other in electrical cabinets. Additionally, solutions that prioritize internal heat exchange and consequent reduction in temperature rise of said rectangular tubular busbars would be advantageous, allowing them to operate for longer periods at temperatures that enable better conductivity, especially for high currents.

### Brief Description of the Invention

The present invention provides a busbar constructed in a rectangular tubular shape with a solid core, featuring superior mechanical resistance compared to solid conductor busbars, with increased conductivity efficiency by reducing the amount of material used compared to conventional systems. Additionally, it includes an internal air passage for heat dissipation, taking advantage of the skin effect. This leads to a decrease in cross-sectional area, increasing current density in the conductor, optimizing material usage and space, and facilitating the assembly of multiple busbars together to enhance current capacity.

An objective of the present invention is to provide a busbar capable of carrying higher electrical current with less material by varying, either increasing or decreasing, the sizes of the solid and hollow parts, thereby optimizing the amount of material appropriate for the desired capacity, contributing to sustainability in terms of materials used.

Another objective of the present invention is to provide a rectangular tubular busbar with internal air passage, reducing temperature rise through thermal dissipation of the conductor under high currents.

It is also an objective of the present invention to provide a busbar that enhances the utilization of the skin effect by using a tubular shape, with less material in the internal area of the conductor.

Another objective of the present invention is to provide a structurally stiffened busbar with a rectangular tubular shape formed by a sequence of at least 10 bends, to withstand dynamic forces and vibrations to which a busbar is subjected, both in normal working conditions and in stress situations, such as during a short circuit.

It is also an objective of the present invention to provide a busbar that enables internal heat dissipation through an air passage, improving its electrical conductivity.

Another objective of the present invention is to provide a rectangular tubular conductor busbar manufactured in copper, aluminum, or bimetallic materials.

Finally, it is an objective of the present invention to provide a busbar with a different constructional characteristic but with dimensions similar to conventional solid busbars, allowing for the replacement of one with the other in various electrical cabinets.

### Brief Description of the Figures

The subject matter of this report will be fully understood in its technical aspects through the detailed description based on the related figures below, in which:

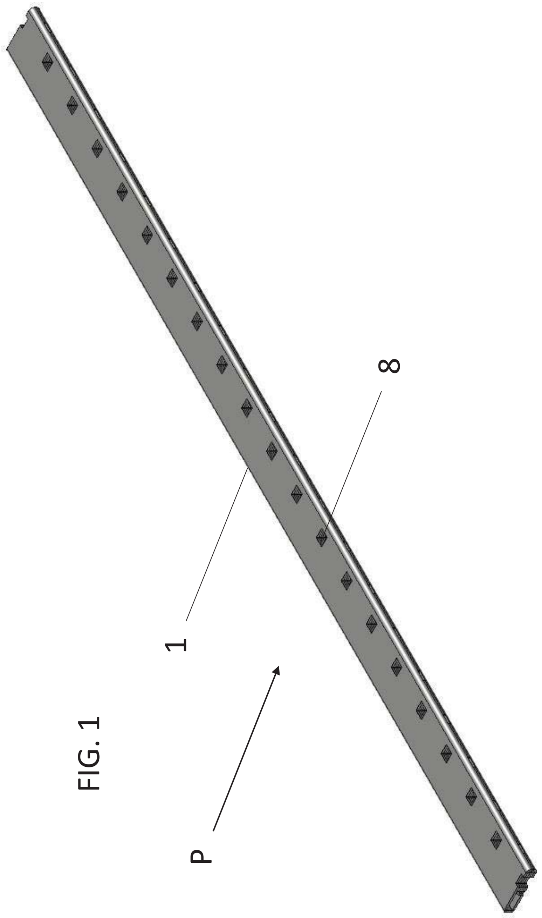

- Figure 1 shows a front perspective view of the rectangular tubular conductor busbar in its main construction, comprising an internal core and featuring a tubular area, as well as internal air passage channels through the core in a transverse direction;

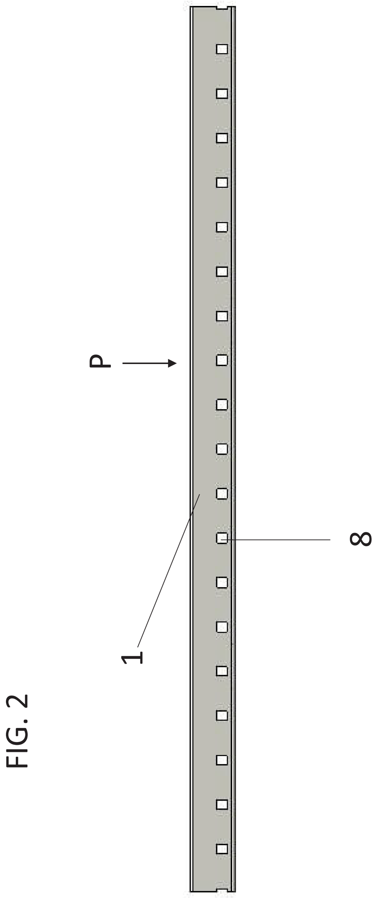

- Figure 2 shows a top view of the rectangular tubular conductor busbar in its main construction;
- Figure 3 shows a left side view of the rectangular tubular busbar in its main construction, where the tubular profile can be observed, including its internal core formed by the junction of three overlapping walls embedded between the upper and lower walls of the body;
- Figure 4 shows a detail view of the profile of the rectangular tubular conductor busbar, in its main construction, in a front perspective view, allowing for observation of its fitting and assembly details, as well as the transverse air inlet and outlet holes;

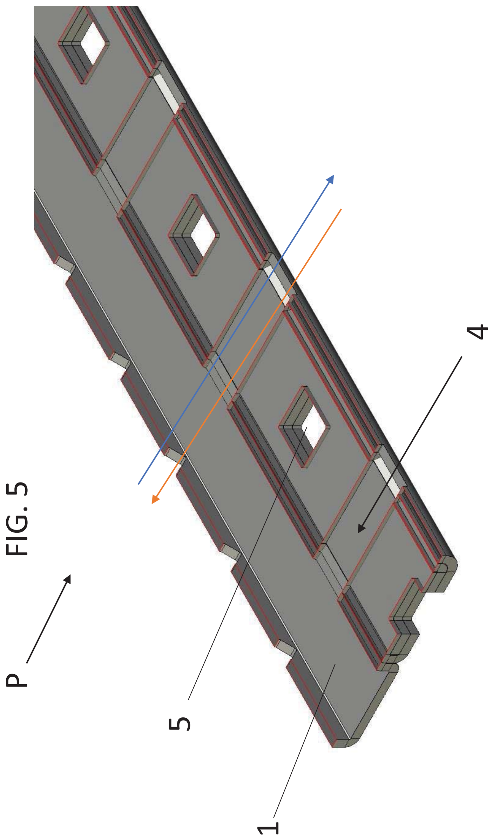

- Figure 5 shows a cross-sectional view of the rectangular tubular busbar in its main construction, in a front perspective view, enabling observation and identification of the transverse air inlet and outlet holes in synergy with the internal air passage channels through the core;
- Figure 6 shows a perspective view of the rectangular tubular conductor busbar in its main variant, comprising an internal core, with pass-through holes and internal air passage channels in a transverse direction.

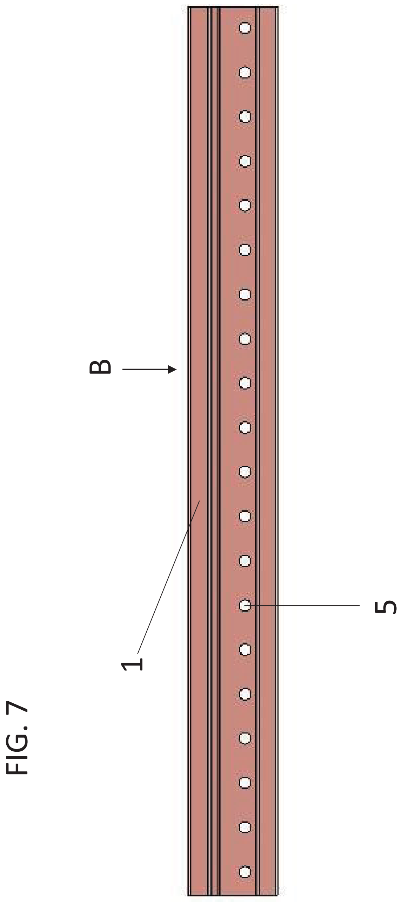

- Figure 7 shows a top view of the rectangular tubular conductor busbar in its main variant;
- Figure 8 shows a side view of the rectangular tubular conductor busbar in its main variant, where it is possible to observe the tubular profile, including its internal core formed by the junction of three overlapping walls;
- Figure 9 shows a detail of the profile of the rectangular tubular conductor busbar, in its frontal perspective view in its main variant, allowing for the observation of its fitting and assembly details, as well as the transverse air inlet and outlet holes aligned with the internal air passage channel through the core;
- Figure 10 shows a cross-sectional view of the rectangular tubular conductor busbar in its main variant, in a perspective that enables the observation and identification of the transverse cooling holes in synergy with the internal cooling channels present in its core;

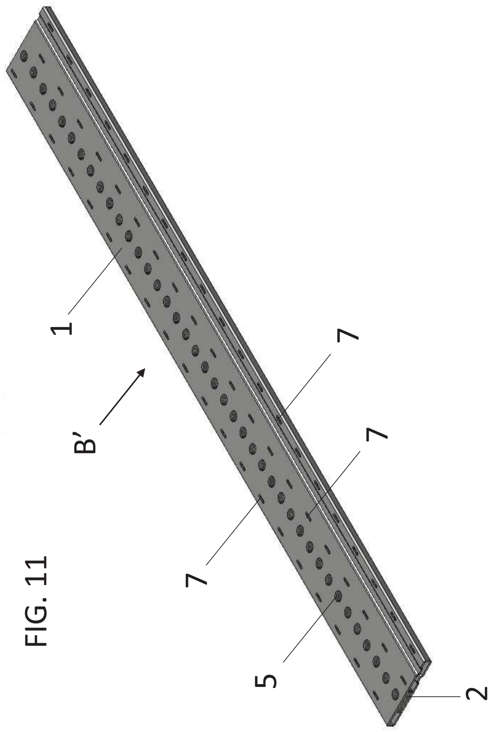

- Figure 11 shows a frontal perspective view of the rectangular tubular conductor busbar in its second constructive variant, comprising an internal core with pass-through holes aligned parallelly in a line;

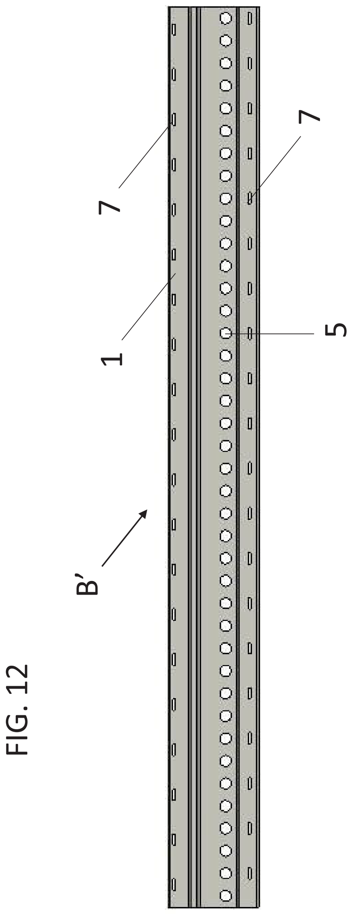

- Figure 12 shows a top view of the rectangular tubular conductor busbar in its second constructive variant;

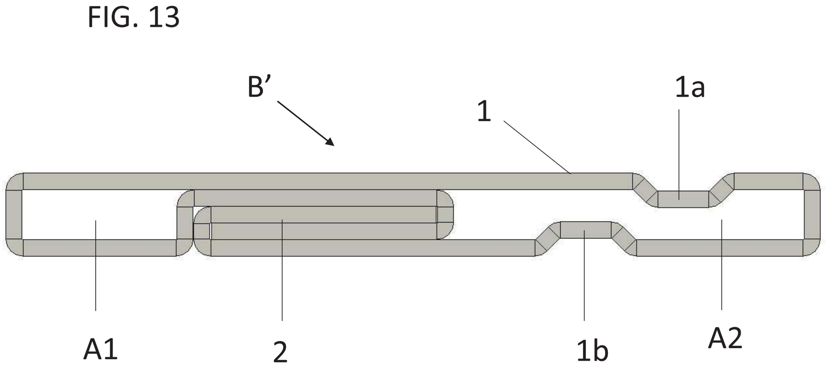

- Figure 13 shows a side view of the rectangular tubular conductor busbar in its second constructive variant, where it is possible to observe the tubular profile, including its internal core formed by the junction of three overlapping walls, located between the upper and lower walls of the body;

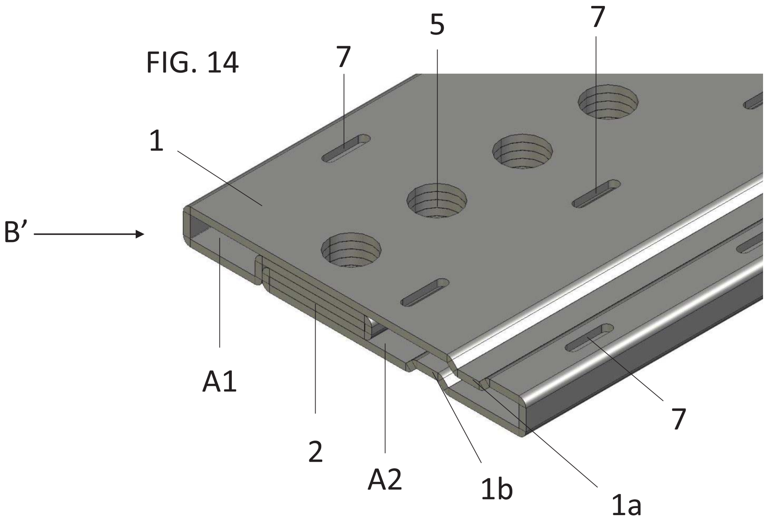

- Figure 14 shows a detail of the profile of the rectangular tubular conductor busbar, in its frontal perspective view of the second constructive variant, enabling the observation of its internal details, as well as the perpendicular air passage holes for heat dissipation;

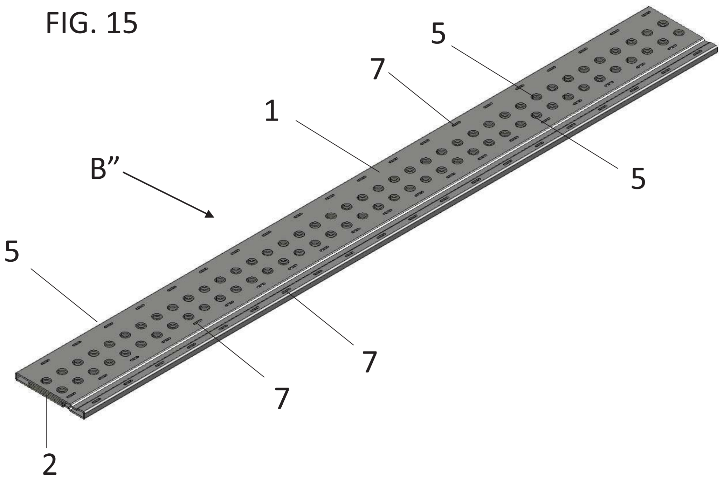

- Figure 15 shows a frontal perspective view of the rectangular tubular conductor busbar in its third constructive variant, comprising an internal core with pass-through holes aligned parallelly in two lines;

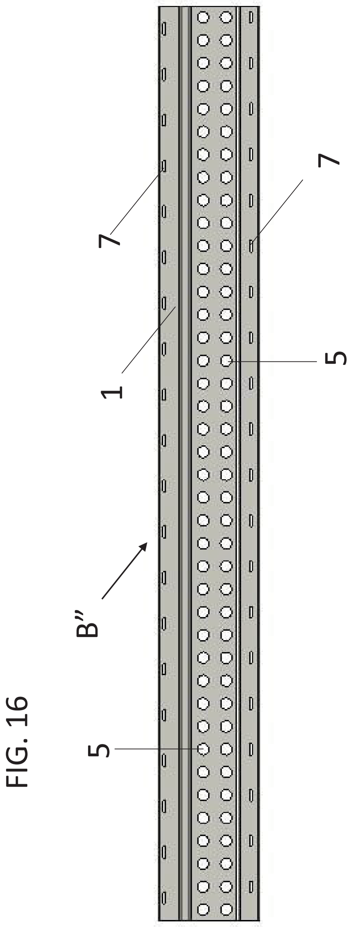

- Figure 16 shows a top view of the rectangular tubular conductor busbar in its third constructive variant;

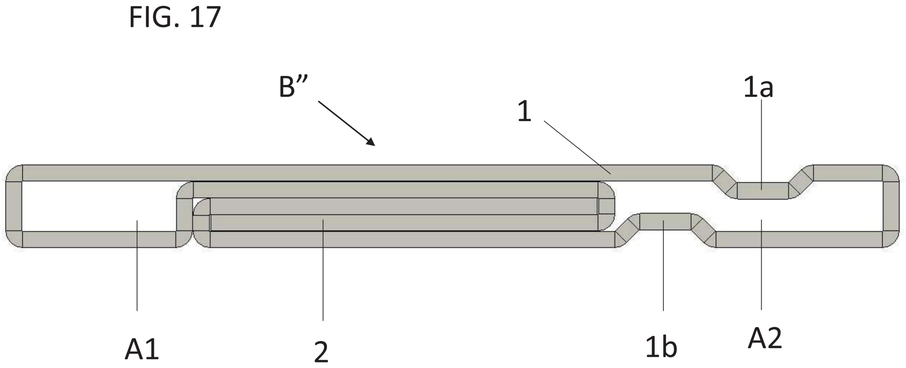

- Figure 17 shows a side view of the rectangular tubular conductor busbar in its third constructive variant, where it is possible to observe the tubular profile, including its internal core formed by the junction of three overlapping walls located between the upper and lower walls of the body;

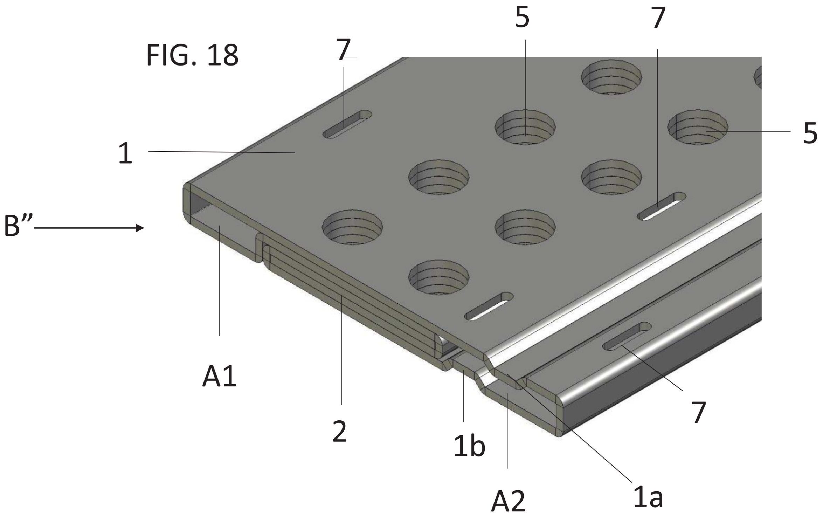

- Figure 18 shows a detail of the profile of the rectangular tubular conductor busbar, in its frontal perspective view of the third constructive variant, enabling the observation of its internal details, as well as the perpendicular air passage holes for heat dissipation;

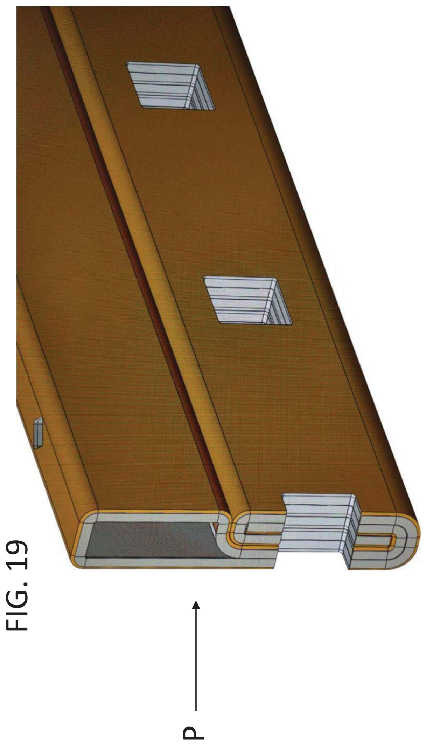

- Figure 19 shows an example of the rectangular tubular conductor busbar, in a frontal perspective view, outlining a embodiment using two conductor materials;

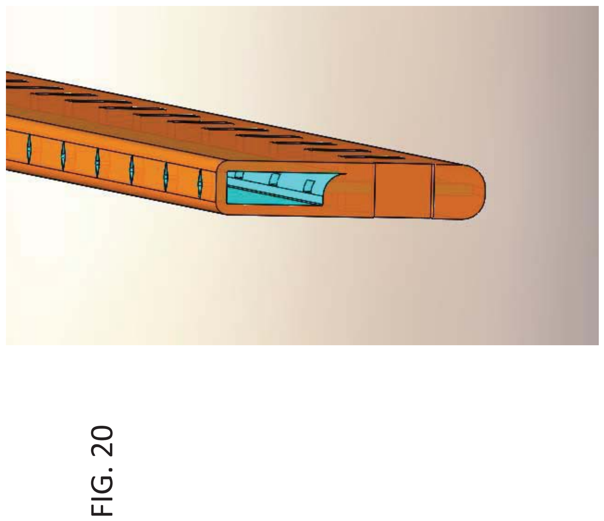

- Figure 20 shows a perspective side view of the rectangular tubular conductor busbar to better demonstrate the air passage channels; and

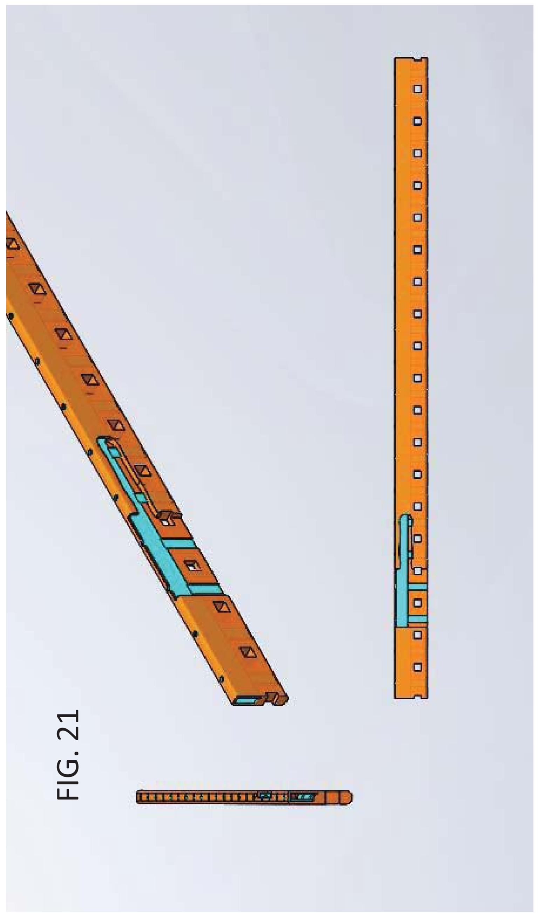

- Figure 21 shows a set of three images with lateral cutouts aimed at demonstrating the construction of the air passage channels inside the rectangular tubular conductor busbar.

### Detailed Description of the Invention

In accordance with the mentioned figures, the present invention "RECTANGULAR TUBULAR CONDUCTOR BUSBAR WITH SOLID CORE AND INTERNAL HEAT DISSIPATION," as shown in the presented figures, comprises a rectangular tubular busbar (P), in a substantially parallelepipedal shape, being a body (1) delimited by external walls and a solid core (2) formed by the embedded overlap of elements, this core being triple in relation to the thicknesses of the walls forming the body (1).

The rectangular tubular busbar (P) is designed for use in electrical cabinets, specifically in low, medium, and high-voltage power switchgears, and prefabricated electrical lines. Its shape is substantially identical and equivalent to that of a conventional solid electrical busbar, allowing for straightforward replacement of one with the other in said electrical cabinets without the need for complex adjustments or modifications. It also allows the use of insulators and other elements that become common to rectangular tubular busbars (P) compared to conventional solid busbars.

In the mentioned rectangular tubular busbar (P), the element that delimits its substantially parallelepipedal shape is its body (1), which is formed by an outer wall subdivided into a front wall, upper wall, rear wall, and lower wall, with the body (1) itself having two distinct regions, a hollow area (A1), and the solid core (2), where the region of the hollow area (A1) is delimited between the rear face of the rectangular tubular busbar (P) and the upper and lower faces of said rectangular busbar (P), and the solid core (2).

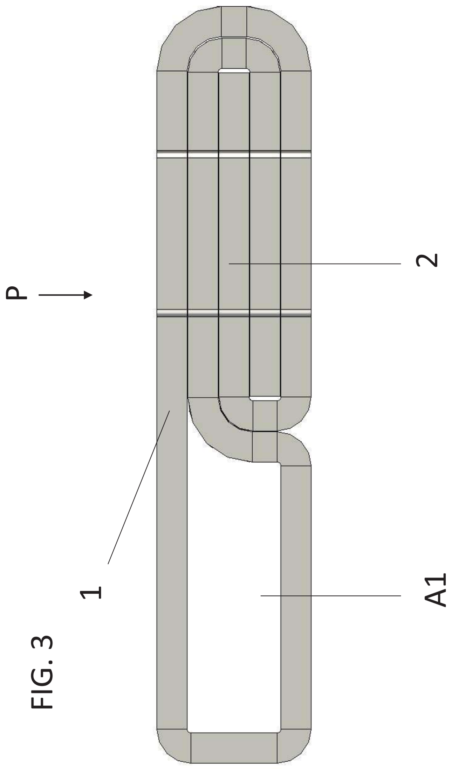

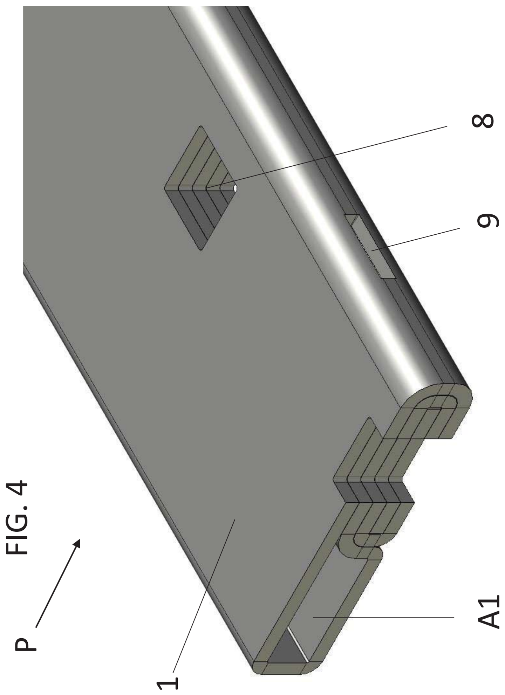

The solid core (2) is located in the region delimited by the front face of the rectangular tubular busbar (P) and the upper and lower walls of said rectangular tubular busbar (P), as well as the hollow area (A1), as can be seen in Figures 3 and 4.

The rectangular tubular busbar (P) also has air inlet holes (9) distributed across the entire front face of said rectangular tubular busbar (P). These air inlet holes (9) have a substantially rectangular shape and are pass-through relative to the thickness of the wall of the body (1).

The air inlet holes (9) of the tubular busbar (P) function as air inlets for internal heat dissipation of the rectangular tubular busbar (P) itself. These air inlet holes (9) form air passage channels (4) that are pass-through relative to the solid core (2), establishing a continuous air passage between the external region of the rectangular tubular busbar (P) and the hollow area (A1).

In the hollow area (A1), specifically on the rear wall of the body (1) of the rectangular tubular busbar (P), air inlet and outlet holes (3) are arranged along its entire length. These holes are aligned and equidistant from each other, with the function of providing an outlet for the air that enters the rectangular tubular busbar (P) through the air passage channels (4) in the solid core (2).

The solid core (2) of the rectangular tubular busbar (P) is the solid part designed for connections and the mechanical structuring element that provides resistance to said rectangular tubular busbar (P), allowing it to withstand potential short-circuit demands, among other conditions. In this regard, the solid core (2) of the rectangular tubular busbar (P) has a series of structural openings (8) in a square shape, allowing horizontal air circulation within said solid core (2) and enabling the mounting of secondary elements on said rectangular tubular busbar (P).

The rectangular tubular busbar (P) presents a first constructive variant called rectangular tubular busbar (B), in a substantially parallelepipedal shape, with a body (1) delimited by external walls and a solid core (2) formed by the overlap of elements, this core being triple in relation to the thicknesses of the walls forming the body (1).

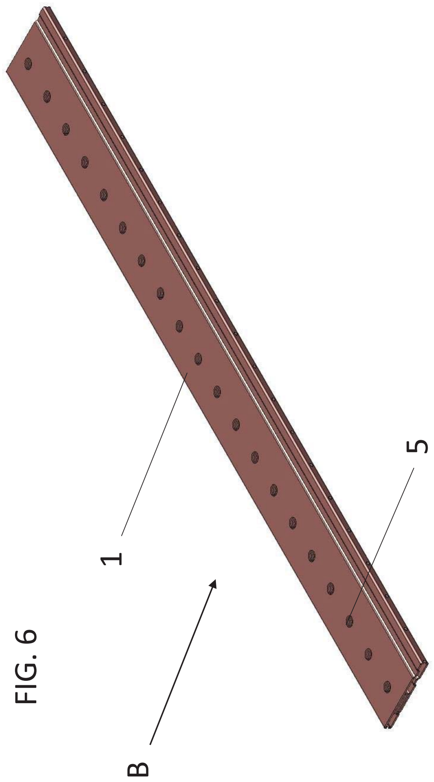

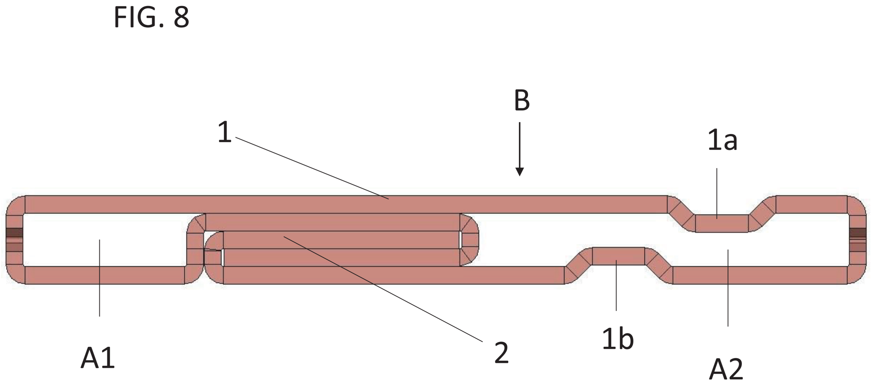

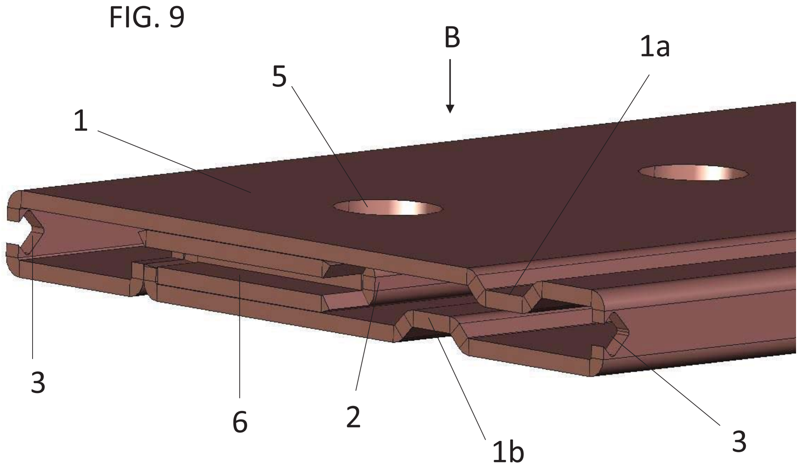

In the aforementioned rectangular tubular busbar (B), the element that delimits its substantially parallelepipedal shape is its body (1), which is formed by an external wall subdivided into front, upper, rear, and lower walls. The rectangular tubular busbar (B) has two recessed regions (1a and 1b), where the upper recessed region (1a) is located on the upper face of the rectangular tubular busbar (B), and the lower recessed region (1b) is located on the lower face of the rectangular tubular busbar (B), with these recessed regions (1a and 1b) not being aligned. Regarding this misalignment, the upper recessed region (1a) is closer to the upper portion of the rectangular tubular busbar (B), while the lower recessed region (1b) is closer to the solid core (2) of said rectangular tubular busbar (B), as can be observed in Figure 6 and especially in Figures 8 and 9.

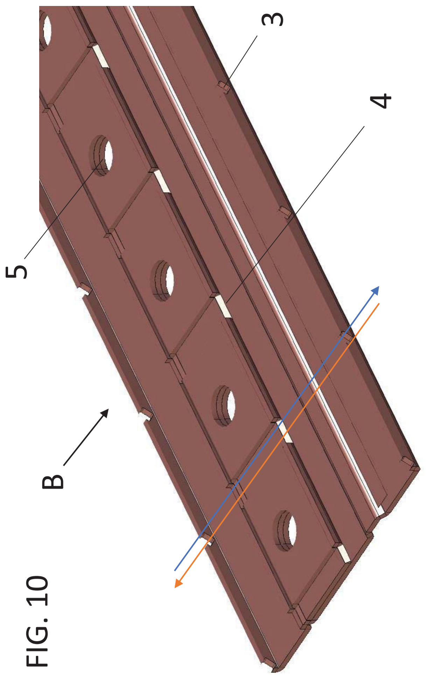

On its front and rear portions, the rectangular tubular busbar (B) has transverse air inlet and outlet holes (3), which allow air circulation within the said rectangular tubular busbar (B). These transverse air inlet and outlet holes (3) are interconnected by air passage channels for heat dissipation (4), which are located inside the body (1), passing through the solid core (2), as can be seen in Figure 10. The transverse air inlet and outlet holes (3) are transverse with respect to the front and rear walls of the body (1) of the rectangular tubular busbar (B).

Regarding the transverse air inlet and outlet holes (3), these have a diamond shape, where said diamonds are pass-through relative to the upper and lower walls of the body (1) of the rectangular tubular busbar (B). The interconnection between these upper and lower transverse air inlet and outlet holes (3) is achieved by an air passage channel for internal heat dissipation (4), with each air passage channel delimited by an air passage area inside the body (1), passing through the solid core (2).

The solid core (2) of the rectangular tubular busbar (B) is the solid part designed for connections and the mechanical structuring element that provides resistance to said rectangular tubular busbar (B), allowing it to withstand potential short-circuit demands, among other conditions. In this sense, the solid core (2) is located in the central region of the rectangular tubular busbar (B) and extends throughout its length, being formed by the overlap of three sections of the same width as the walls of the body (1), occupying the entire internal space of the rectangular tubular busbar (B), i.e., being in contact with both the upper and lower walls of said body (1). Additionally, the solid core (2) of the tubular busbar (B) is profiled to be locked, with the blank ends locked together, as can be seen more clearly in Figure 8. This construction provides greater mechanical strength to the tubular busbar (B), making the assembly more rigid.

The rectangular tubular busbar (B) also features a series of mounting holes (5) in the core region (2), where these mounting holes (5) are pass-through and traverse the upper and lower walls of the body (1), as well as the solid core (2). The mounting holes (5) are symmetrically arranged in the solid part of the rectangular tubular busbar (B) and equidistant from each other, with this symmetry and equidistance forming a line.

The presence of the solid core (2) in the rectangular tubular busbar (B) allows for the identification of two distinct areas inside said rectangular tubular busbar (B), being a hollow area (A1), a hollow area (A2), and the solid core (2). The hollow area (A2) comprises the space formed between the front, upper, and lower walls of the body (1) and the solid core (2), while the hollow area (A1) comprises the space formed between the rear, upper, and lower walls of the body (1) and the solid core (2). These hollow areas (A1 and A2) are communicable only through the internal air passage channels (4).

The aforementioned mounting holes (5) in the rectangular tubular busbar (B) serve primarily to assist in the assembly of the rectangular tubular busbars (B) in their respective equipment, facilitating power branching and the attachment of secondary elements, as well as reducing weight and saving material.

The rectangular tubular busbar (B) also features a mounting groove (6), located at the end of the rectangular tubular busbar (B), formed by the internal air passage channel (4) and the air inlet and outlet holes (3), with these being sectioned near their central region, as can be seen in Figure 9.

The present invention also comprises a constructive variant of the rectangular tubular busbar (B) denoted as rectangular tubular busbar (B'), wherein this variant differs mainly by replacing the transverse air inlet and outlet holes (3) and internal air passage channels (4) with air passage openings (7).

The internal air passage openings (7) are arranged perpendicular to the upper and lower walls of the body (1), arranged in three lines: one line in the hollow area (A1) and two lines in the hollow area (A2). The first line in the hollow area (A2) is located between the front wall and the two recessed regions (1a and 1b), while the second line is located between the solid core (2) and the recessed regions (1a and 1b).

The internal air passage openings (7) are equidistant from each other in each of the three lines, with each referenced internal air passage opening (7) being substantially rectangular in shape and pass-through, meaning they impact both the front and rear walls, thus creating an air passage for internal heat dissipation of the rectangular tubular busbar (B').

The rectangular tubular busbar (B) comprises a second construction variant denoted as (B"), where this variant features the same constructiveness as the first construction variant (B'), but with two lines of mounting holes (5) arranged over the solid core region (2).

The rectangular tubular busbar (P), as well as the tubular busbar (B) and its construction variants (B' and B"), stand out from other electrical busbars in the prior art mainly due to their rectangular tubular construction with a solid core (2), whereas other busbars feature solid or closed tubular construction. As a result, the rectangular tubular busbar (P, B) provides significant material savings in its construction, reducing production costs and the impact on natural reserves of elements used in its construction, such as copper, aluminum, gold, and silver.

Another advantage of the rectangular tubular busbars (P and B) and their construction variants (B' and B") lies in their high mechanical resistance. The curved wall-based construction enhances mechanical strength compared to solid rectangular busbars, resulting in minimal deformation when subjected to high-level short-circuit tests.

Finally, another advantage of the rectangular tubular busbars (P and B) and their construction variants (B' and B") is the presence of transverse air inlet and outlet holes (3), internal air passage channels (4) through the solid core (2), and internal air passage openings (7), allowing efficient heat exchange between the busbars (P, B, B', and B"), favoring them to operate within a temperature range that does not affect their electrical conductivity.

It should be understood that this description does not limit the application to the details described here and that the invention is capable of other embodiments and of being practiced or executed in a variety of ways within the scope of the claims. Although specific terms have been used, these terms should be interpreted in a generic and descriptive sense, not for the purpose of limitation.

## Claims

1. A **RECTANGULAR TUBULAR CONDUCTOR BUSBAR** constructed of an electrical conductor material or a combination of two electrical conductor materials, featuring a rectangular tubular shape, applied in electrical cabinets for low, medium, and high voltage power switchgears, and prefabricated electrical lines, ***characterized in that,*** in its main construction, it comprises a rectangular tubular busbar (P), substantially parallelepiped in shape, having a body (1) delimited by external walls, a solid core (2) formed by the overlapped elements, this core being triple in relation to the thickness of the walls forming the body (1), located between the upper and lower walls of said body (1); the rectangular tubular busbar (P) having two distinct regions, a hollow area (A1), and the solid core (2), wherein the hollow area region (A1) is delimited between the rear face of the tubular busbar (P) and the upper and lower faces of said rectangular tubular busbar (P), and the solid core (2) is located in the region delimited by the front face of the rectangular tubular busbar (P) and the upper and lower walls of said rectangular tubular busbar (P), as well as the hollow area (A1).

2. The **BUSBAR,** according to claim 1, ***characterized in that*** the body (1) is the element that defines the substantial shape of the rectangular tubular busbar (P), being subdivided into front wall, upper wall, rear wall, and lower wall.

3. The **BUSBAR,** according to claims 1 and 2, ***characterized in that*** the rectangular tubular busbar (P) has air inlet holes (9) arranged throughout the front face of said rectangular tubular busbar (P), wherein these air inlet holes (9) have a substantially rectangular shape, passing through in relation to the thickness of the wall of the body (1).

4. The **BUSBAR,** according to claims 1, 2, and 3, ***characterized in that*** the air inlet holes (9) form air passage channels (4), which pass through in relation to the solid core (2), establishing a continuous air passage between the external region of the tubular busbar (P) and the hollow area (A1).

5. The **BUSBAR,** according to any of the preceding claims 1 to 4, ***characterized in that*** in the hollow area (A1), specifically in the rear wall of the body (1) of the rectangular tubular busbar (P), air inlet and outlet holes (3) are arranged throughout its extension, aligned and equidistant from each other, with the function of providing an air outlet in relation to the air that enters the rectangular tubular busbar (P) through the internal air passage channels (4) through the solid core (2).

6. The **BUSBAR,** according to claim 1, ***characterized in that*** the solid core (2) of the rectangular tubular busbar (P) has a series of structural openings (8) in a square shape, allowing horizontal air circulation within said solid core (2) of the rectangular tubular busbar (P), as well as enabling the fixation and mounting of connections on said rectangular tubular busbar (P).

7. The **RECTANGULAR TUBULAR CONDUCTOR BUSBAR,** in a first constructive variant of the rectangular tubular busbar (P), as defined in any one of claims 1 to 6, ***characterized in that*** it features a rectangular tubular busbar (B) delimited by a body (1), formed by an outer wall subdivided into front, upper, rear, and lower walls, wherein the rectangular tubular busbar (B) presents two recessed regions (1a and 1b), with the recessed region (1a) located on the upper face of the rectangular tubular busbar (B) and the recessed region (1b) located on the lower face of the rectangular tubular busbar (B), and said recessed regions (1a and 1b) are not aligned, with the recessed region (1a) being closer to the upper portion of the rectangular tubular busbar (B), while the recessed region (1b) is closer to the core (2) of said tubular busbar (B); the rectangular tubular busbar (B) comprising a hollow area (A1) and a hollow area (A2) and a solid core (2), wherein the hollow area (A2) comprises the space formed between the front, upper, and lower walls of the body (1) and the solid core (2), and the hollow area (A1) comprises the space formed between the rear, upper, and lower walls of the body (1) and the solid core (2).

8. The **BUSBAR,** according to claim 7, ***characterized in that*** the rectangular tubular busbar (B) has transverse air inlet and outlet holes (3), which allow air circulation from the interior of said tubular busbar (B), wherein these transverse air inlet and outlet holes (3) are interconnected by internal air passage channels (4) through the solid core (2), located inside the body (1), passing through the solid core (2), and the transverse air inlet and outlet holes (3) are transverse considering the front and rear walls of the body (1).

9. The **BUSBAR,** according to claims 7 and 8, ***characterized in that*** the solid core (2) is located in the central region of the rectangular tubular busbar (B) and extends throughout its length, consisting of the overlap of three sections of the same width as the walls of the body (1), occupying the entire internal space of the rectangular tubular busbar (B) between the upper and lower walls of said body (1).

10. The **BUSBAR,** according to any one of claims 7 to 9, ***characterized in that*** the rectangular tubular busbar (B) has a series of mounting holes (5) in the solid core (2) region, wherein said mounting holes (5) are through-holes that pass through the upper and lower walls of the body (1) as well as the solid core (2); these mounting holes (5) being symmetrically and equidistantly arranged on the rectangular tubular busbar (B), with said symmetry and equidistance in a straight line.

11. The **BUSBAR,** according to claim 7, ***characterized in that*** the hollow areas (A1 and A2) are communicable only through the internal air passage channels (4) through the core (2).

12. The **RECTANGULAR TUBULAR CONDUCTOR BUSBAR,** in a constructive variant of the rectangular tubular busbar (B), as defined in any one of claims 7 to 11, ***characterized in that*** it features a rectangular tubular busbar (B'), wherein this constructive variant differs mainly by replacing the transverse air inlet and outlet holes (3) and the internal air passage channels (4) through the solid core (2) with internal air passage openings (7); these internal air passage openings (7) having a perpendicular arrangement in relation to the upper and lower walls of the body (1), arranged in three lines: one line in the hollow area (A1) region and two lines in the hollow area (A2) region; the first line in the hollow area (A2) region being located between the front wall and the two recessed regions (1a and 1b), and the second line is located between the solid core (2) and the recesses (1a and 1b).

13. The **BUSBAR,** according to claim 12, ***characterized in that*** the internal air passage openings (7) are equidistantly spaced in each of the three lines, with each referenced internal air passage opening (7) having a substantially rectangular shape and impacting both the front and rear walls, thus creating an air passage for cooling the rectangular tubular busbar (B').

14. The **RECTANGULAR TUBULAR CONDUCTOR BUSBAR,** in a constructive variant of the rectangular tubular busbar (B') as defined in any one of claims 12 and 13, ***characterized in that*** it features a constructive variant denoted as (B"), which has the same constructiveness as the first constructive variant (B'), but with two lines of mounting holes (5) arranged over the solid core (2) region.
